# EUROPEAN PATENT SPECIFICATION

(11) **EP 3 061 521 B1**
(45) Date of publication and mention of the grant of the patent: **03.01.2018**
(21) Application number: 16156752.4
(22) Date of filing: 22.02.2016
(51) Int. Cl.: B01F 13/10, B01F 15/04, B01F 15/00

(54) **NANOPARTICLE DISPERSING SYSTEM AND METHOD**
NANOPARTIKELDISPERGIERSYSTEM UND VERFAHREN
SYSTÈME DE DISPERSION DE NANOPARTICULES ET PROCÉDÉ

(30) Priority: 20.02.2015 US 201514627266
(43) Date of publication of application: 31.08.2016
(73) Proprietor: United Technologies Corporation, Farmington, CT 06032 (US)
(72) Inventor: BUTCHER, Evan, Manchester, CT 06042 (US); DARDAS, Zissis A., Worcester, MA 01602 (US); TWELVES, Jr., Wendell V., Glastonbury, CT 06033 (US); KIRONN, Lexia, Rocky Hill, CT 06067 (US)
(74) Representative: Iceton, Greg James

(56) References cited:
- WO-A1-2014/078750
- US-A- 2 680 030
- US-A- 6 065 638
- US-A- 6 161 060
- US-A1- 2014 257 579

## Description

### BACKGROUND

The present disclosure relates generally to jet engines and, more particularly, to the fuel systems of jet engines. Specifically, the present disclosure relates to cooling fuel within the fuel systems.

A gas turbine engine typically includes a high-pressure spool, a combustion system, and a low-pressure spool disposed within an engine casing. These components form a generally axial, serial flow path about an engine centerline. The high-pressure spool includes a high-pressure turbine, a high-pressure shaft extending axially forward from the high-pressure turbine, and a high-pressure compressor connected to a forward end of the high-pressure shaft. The low-pressure spool includes a low-pressure turbine disposed downstream of the high-pressure turbine. The low-pressure spool also includes a low-pressure shaft typically extending coaxially through the high-pressure shaft, and a low-pressure compressor connected to a forward end of the low-pressure shaft forward of the high-pressure compressor. The combustion system is disposed between the high-pressure compressor and the high-pressure turbine. The combustion system receives compressed air from the compressors as well as fuel provided by a fuel injection system. A combustion process is carried out within the combustion system to produce high-energy gases. These high-energy gases produce thrust and turn the high- and low-pressure turbines. In turn, the high- and low-pressure turbines drive the compressors to sustain the combustion process.

In jet engines, fuel is commonly used prior to combustion as a heat sink for cooling heat-producing aircraft components. For example, in a gas turbine engine, fuel can be used to cool bleed air from an engine compressor in a cabin air cycle control system, heat-producing components in a thermal management system, and/or an engine turbine in a turbine cooling system. Using the fuel itself as a coolant is more efficient than adding a cooling fluid flow to cool aircraft components. However, the cooling capacity of fuel is limited because oxygen initiates the formation of soot deposits, or coke, at temperatures between about 350 °F (177 °C) and about 850 °F (454 °C). Accordingly, efforts have been made to increase the cooling capacity of fuel.

Methods of increasing the cooling capacity of fuel in gas turbine engines include deoxygenating the fuel. Deoxygenating the fuel reduces the likelihood of coke formation, or coking. However, some propulsion devices such as supersonic combustion ramjet (SCRAM) jet engines operate at temperatures near 850 °F (454 °C) and up to 1700 °F (927 °C). At such temperatures, deoxygenating the fuel may not provide enough cooling capacity to cool aircraft components to a desired temperature without coking.

One method of increasing the cooling capacity of fuel for cooling components in SCRAM jet engines is endothermic cracking. Endothermic cracking absorbs a significant amount of heat by breaking long chain fuel molecules into lower molecular weight hydrocarbons through the use of a nanoparticle catalyst. The hydrocarbons can then be burned in the combustor more easily, reducing the probability of coking. Endothermic cracking of fuel is a common cooling strategy for combustor walls in SCRAM jet engines.

In order to disperse the nanoparticle catalyst within the fuel, a component of a fuel system, such as the walls of a heat exchanger, can be coated with a layer of the catalyst. When fuel passes over the catalyst coating, endothermic cracking occurs, creating a heat sink and transforming the fuel into an advanced coolant. However, the catalyst coating becomes less effective over time as the anchored nanoparticles react with the fuel.

Current methods of endothermic cracking utilize a nanoparticle catalyst suspension added to liquid fuel to improve the efficiency of the endothermic reaction. The catalyst can be tailored to break apart specific molecular components to maximize the heat required for the reaction while reducing the amount of coking. In this manner, lighter hydrocarbons are burned in the combustor, increasing combustor efficiency while reducing the tendency for coke formation, resulting in a concurrent emissions benefit. However, nanoparticles settle out of the suspension over time due to gravity. Without homogenous dispersion in the fuel, the advantages of the nanoparticle catalyst are reduced. Thus, nanoparticle precipitation makes long-term storage of fuel treated with a catalyst suspension impractical.

US 6065638 discloses a system suitable for dispersing a catalyst in a fuel.

### SUMMARY

A system for dispersing a catalyst in a fuel includes a first reservoir containing the fuel, and a second reservoir including an agitator and containing a quantity of the catalyst suspended in the fuel. The system also includes a first conduit extending from the first reservoir, a second conduit extending from the second reservoir, and a mixing nozzle connected to the first conduit and the second conduit. The mixing nozzle includes a first meter positioned within the first conduit, a second meter positioned within the second conduit, a valve positioned upstream from the second meter within the second conduit, a junction in flow communication with the first conduit and the second conduit, a mixer downstream from the junction, a sensor positioned between the mixer and an outlet; and a controller connected to the valve and the first and second meters, the controller receiving feedback from the sensor.

A method for dispersing a catalyst in a fuel includes storing the fuel in a first reservoir, suspending the catalyst in the fuel in a second reservoir, and delivering a first flow from the first reservoir and a second flow from the second reservoir to a mixing nozzle. The method also includes mixing the first flow and the second flow within the mixing nozzle, sensing a quantity of the catalyst in the mixing nozzle after the first flow and the second flow have been mixed, and regulating the first flow and the second flow within the mixing nozzle based on the quantity of catalyst sensed.

An on-board system for dispersing a catalyst includes a reservoir containing an untreated fuel and a conduit extending from the reservoir to an outlet. The system also includes a flow regulator positioned within the conduit; a catalyst device positioned within the conduit downstream from the flow regulator, wherein the catalyst device is replaceable; a mixer positioned within the conduit downstream from the catalyst device; a sensor positioned within the conduit downstream from the mixer and upstream from the outlet; and a controller connected to the flow regulator, the controller receiving feedback from the sensor.

### BRIEF DESCRIPTION OF THE DRAWINGS

FIG. 1 is a view of existing aircraft fueling equipment.
FIG. 2 is a view of existing aircraft fueling equipment incorporating a mixing system of the present disclosure.
FIG. 3 is a cross-sectional view of a mixing nozzle of the mixing system of FIG. 2.
FIG. 4 is a simplified perspective diagram of an on-board mixing system.
FIG. 5A is a schematic diagram of a nanoparticle bed in series with a fuel tank.
FIG. 5B is a schematic diagram of a three-dimensional matrix in series with a fuel tank.

### DETAILED DESCRIPTION

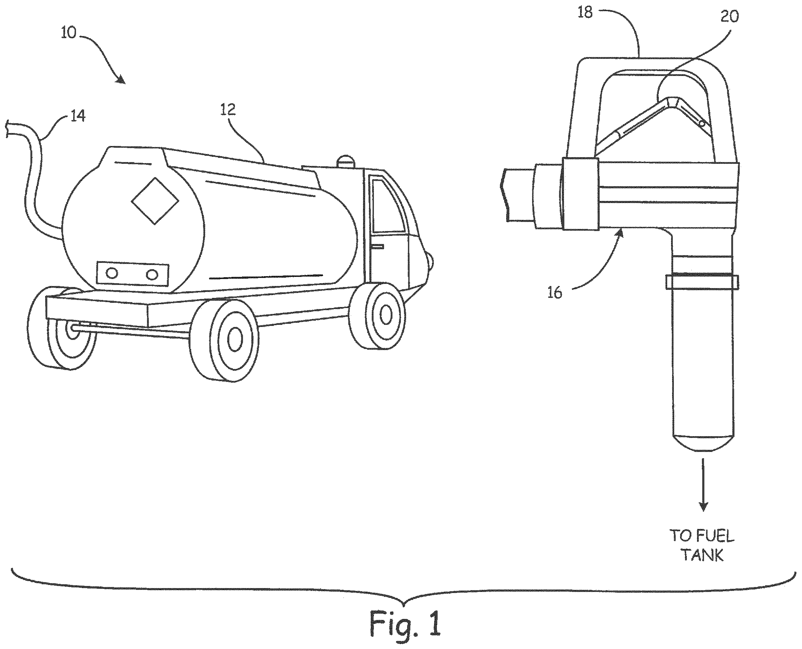

FIG. 1 is a view of existing aircraft fueling equipment 10. While the present disclosure is described with reference to an aircraft such as a SCRAM jet engine, the present disclosure can be used in any engine or other system where fuel can be used as an advanced coolant. While the present disclosure is described with reference to an aircraft fueling system, the present disclosure can be used in any chemical reaction or other system where a nanoparticle is dispersed within a liquid, such as a hydrogenation reaction.

In the embodiment shown in FIG. 1, existing aircraft fueling equipment 10 includes untreated fuel reservoir 12, untreated fuel conduit 14, and nozzle 16. In the embodiment of FIG. 1, nozzle 16 is a conventional filler nozzle including handle 18 and lever 20. In other embodiments, existing aircraft fueling equipment 10 can include any number of systems commonly used for fueling a vehicle such as an aircraft, including both on- and off-board systems. In the embodiment shown in FIG. 1, untreated fuel reservoir 12 is a jet fuel tank. In other embodiments, fuel reservoir 12 can include any type of reservoir suitable for holding fuel, such as a fuel tank or fuel truck. Untreated fuel conduit 14 extends from untreated fuel reservoir 12, connecting untreated fuel reservoir 12 to nozzle 16. In the embodiment shown in FIG. 1, handle 18 and lever 20 are present to aid in manual fueling. In other embodiments, nozzle 16 can automatically dispense fuel using any number of mechanized systems. In this manner, existing aircraft fueling equipment 10 can deliver untreated fuel to an aircraft fuel tank as it is prepared for flight. The embodiments of the present disclosure can be incorporated into existing aircraft fueling equipment 10 for a cost-effective means of delivering a homogenous fuel mixture to an aircraft fuel tank.

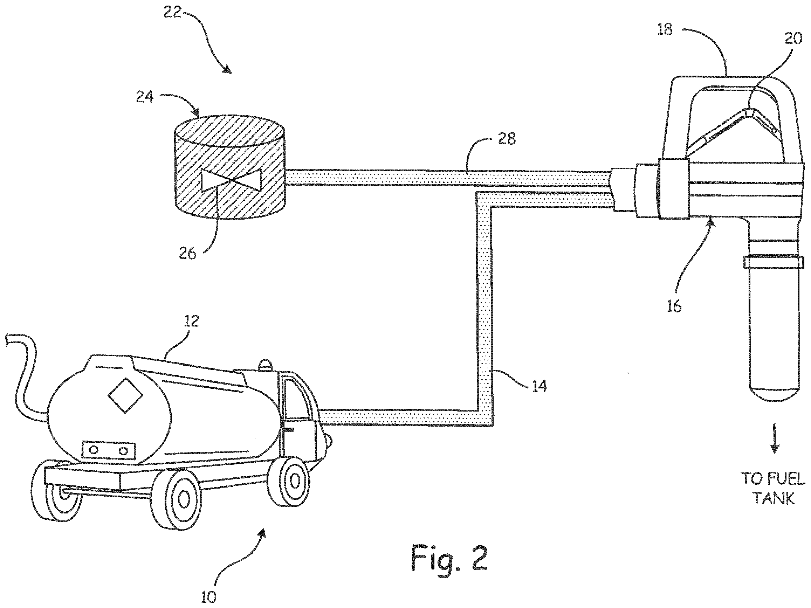

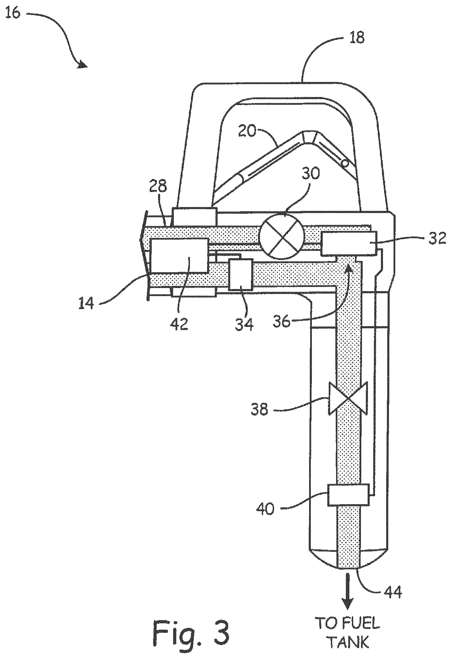

FIG. 2 is a view of existing aircraft fueling equipment 10 incorporating a mixing system 22 of the present disclosure. Mixing system 22 includes treated fuel reservoir 24, agitator 26, and treated fuel conduit 28. In the embodiment of FIG. 2, mixing system 22 also incorporates additional components into nozzle 16, as described below in detail in FIG. 3.

Treated fuel reservoir 24 stores fuel for an aircraft or other vehicle treated with a nanoparticle catalyst. Nanoparticle catalyst treated fuel is referred to as "treated fuel" herein. The nanoparticle catalyst can be any number of catalysts to provide the desired fuel properties, namely augmenting the cooling capacity of a given type of fuel. The catalyst can include any transition metal catalyst, including a tungsten-based catalyst, platinum-based catalyst, and combinations thereof. For example, the catalyst could be finely dispersed tungsten, molybdenum, or niobium oxides with or without noble metal additions, such as platinum and rhenium. The nanoparticles can be functionalized with organic solvent molecules to help with dispersion in the hydrocarbon fuel. Additional chemical molecules can be used in treating the fuel to impart additional characteristics as desired, such as increasing reaction activity and inhibiting sintering.

The nanoparticle catalyst endothermically cracks the fuel to increase the cooling capacity of the fuel for absorbing heat from aircraft components. As used in this disclosure, the term "crack" or "cracking" refers to decomposing a molecule or molecules into lighter molecules. The decomposition reaction absorbs heat and thereby increases the amount of heat the aircraft fuel can absorb. The cracking reaction can be any number of reactions that create a heat sink, such as cleaving of carbon-to-carbon bonds or dehydrogenation. The ratio of nanoparticle catalyst to fuel can be selected based on the type of fuel to be used. A typical ratio of nanoparticle catalyst to fuel may range from about 0.5 wt. % to about 5 wt. %. The ratio of catalytic sites on the nanoparticle catalyst can also be selected based on the type fuel to be used. Thus, for a given fuel having a known composition, the cooling capacity of the fuel can be adjusted.

The nanoparticle catalyst can range in size from about 50 nm to about 1,000 nm. Over time, nanoparticles in suspension with the fuel can settle to the bottom of treated fuel reservoir 24. Agitator 26 mixes nanoparticles that have precipitated out of the mixture back into suspension with the fuel. In the embodiment of FIG. 2, agitator 26 is a rotating mixer. In other embodiments, agitator 26 can use any mechanical means of combining the nanoparticle catalyst with the fuel to keep the treated fuel relatively homogenous before the treated fuel is delivered to treated fuel conduit 28. Treated fuel conduit 28 and untreated fuel conduit 14 deliver treated and untreated fuel to nozzle 16. Treated and untreated fuels are then combined in nozzle 16 (described in detail in FIG. 3). In this manner, the concentration of the nanoparticle catalyst in the treated fuel can be adjusted and controlled while the treated fuel is stored long-term.

FIG. 3 is a cross-sectional view of nozzle 16 of mixing system 22. Untreated fuel conduit 14 and treated fuel conduit 28 come together within nozzle 16. Nozzle 16 includes handle 18, lever 20, valve 30, treated fuel meter 32 untreated fuel meter 34, flow junction 36, mixer 38, sensor 40, controller 42, and outlet 44. In one embodiment of this disclosure, treated fuel meter 32 and untreated fuel meter 34 are flow-metering devices, or flow meters, regulating the flow within each conduit and maintaining a desired mixing ratio after receiving feedback from downstream sensors. In other embodiments, treated fuel meter 32 and untreated fuel meter 34 can be any flow regulator, including but not limited to a control valve, needle valve, variable orifice valve, or adjustable valve.

Valve 30 and treated fuel meter 32 are located within treated fuel conduit 28. Valve 30 controls the flow of treated fuel within treated fuel conduit 28. The concentration of nanoparticle catalyst in treated fuel reservoir 24 (not shown in FIG. 3) can be as much as 10,000 times higher than the desired ratio delivered to the aircraft fuel tank. Valve 30 opens and closes to allow the fuel treated with the nanoparticle catalyst to mix with the fuel from untreated fuel conduit 14 at flow junction 36. Treated fuel meter 32 monitors the flow of the treated fuel between valve 30 and flow junction 36 and communicates with controller 42 to regulate valve 30. In this manner, the flow of treated fuel mixing with untreated fuel can be carefully regulated.

Untreated fuel from untreated fuel conduit 14 mixes with treated fuel at flow junction 36. Untreated fuel meter 34 is positioned within untreated fuel conduit 14. Untreated fuel meter 34 monitors the flow of untreated fuel within untreated fuel conduit 14. Mixer 38 is located downstream of flow junction 36 to mix the treated and untreated fuels and make the resulting fuel as homogenous as possible. Mixer 38 can be a swirl mixer as shown in FIG. 3, or any other mixer to evenly combine the nanoparticle catalyst-treated fuel with the untreated fuel. Sensor 40 is located downstream from mixer 38. In one embodiment of this disclosure, sensor 40 is a light-scattering sensor. In other embodiments, sensor 40 can be any sensor for detecting the concentration of nanoparticles in the fuel after the treated and untreated fuels are mixed and before the flow reaches outlet 44. Sensor 40 communicates with treated fuel meter 32 and controller 42 to control the concentration of nanoparticle catalyst flowing into the aircraft fuel tank. In this manner, treated and untreated fuel can be kept separate until flow junction 36, and a variety of fuel and catalyst combinations and concentrations can be used in the same mixing system.

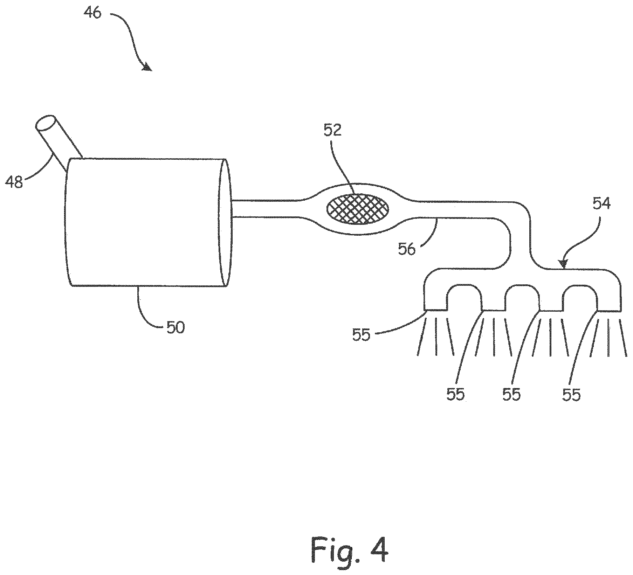

FIG. 4 is a simplified diagram of on-board mixing system 46. On-board mixing system 46 utilizes concepts similar to mixing system 22 of FIGS. 2-3, but allows for mid-air re-fueling. On-board mixing system 46 includes fuel inlet 48, fuel tank 50, catalyst device 52, distribution system 54, channels 55, and on-board conduit 56. Fuel enters fuel inlet 48 for storage in fuel tank 50. From fuel tank 50, fuel passes over catalyst device 52 on its way to distribution system 54 via on-board conduit 56. Distribution system 54 can then direct the fuel towards channels 55. Channels 55 can distribute the fuel to combustors, or channels 55 can be conduits leading to any number of heat-producing aircraft components that require cooling.

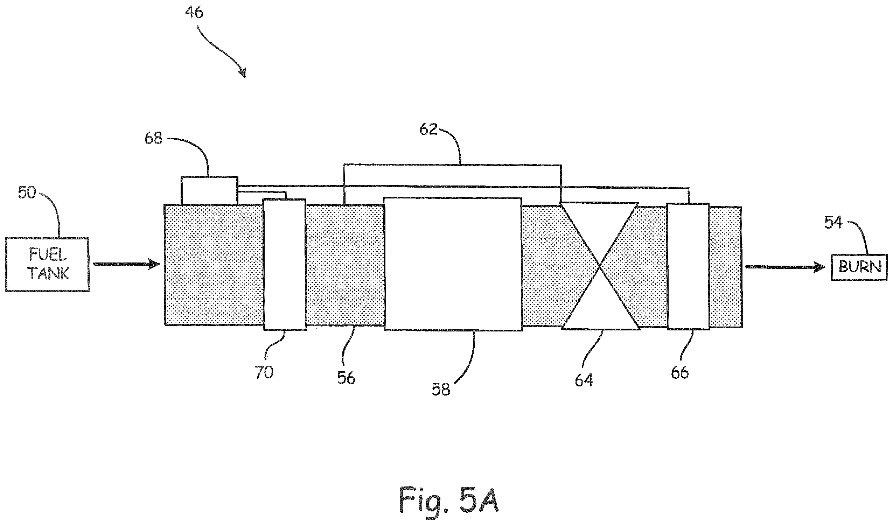

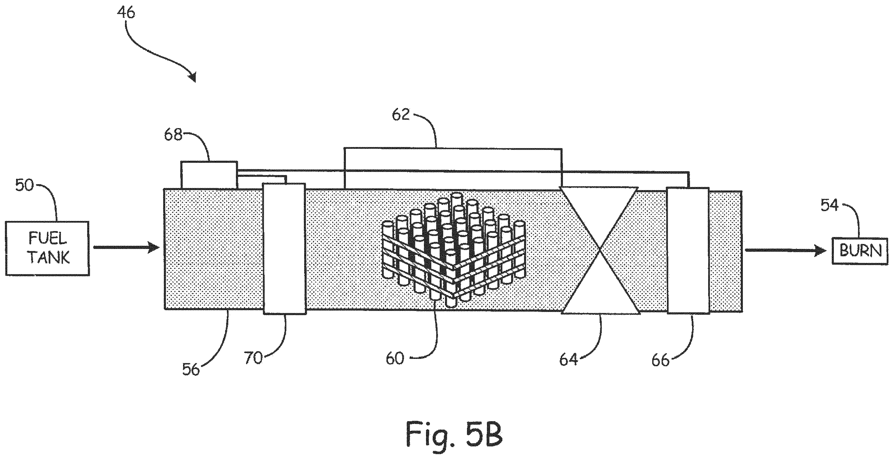

Catalyst device 52 is a replaceable or refillable device (described in further detail below and in FIGS. 5A and 5B), and includes a nanoparticle catalyst bound to its surface. As the fuel flows over catalyst device 52, the fuel picks up and reacts with the nanoparticle catalyst in the same manner as described in FIG. 2 above. Specifically, the nanoparticle catalyst endothermically cracks the fuel to increase the cooling capacity of the fuel. Catalyst device 52 can also have a soluble binder that will release the nanoparticles gradually and prevent the fuel flow from washing the nanoparticles from catalyst device 52 too quickly. On-board mixing system 46 can also include an access door (shown and described in detail in FIG. 5) to replace or replenish catalyst device 52. In this manner, catalyst device 52 can be added to an existing on-board fuel distribution system, transforming the fuel into an advanced coolant that can be used to cool a variety of heat-producing aircraft components.

FIG. 5A is a diagram of on-board conduit 56 having nanoparticle bed 58. FIG. 5B is a perspective diagram of on-board conduit 56 having three-dimensional matrix 60. Similar to the embodiment of on-board mixing system 46 described in FIG. 4, both nanoparticle bed 58 and three-dimensional matrix 60 in the embodiment of FIGS. 5A and 5B include a nanoparticle catalyst on their respective surfaces to be disbursed in the fuel as it passes through on-board conduit 56. In other embodiments, a nanoparticle catalyst is injected into the fuel in a dry powder form through an injection nozzle or other mechanismhaving a variable flow rate, such as a screw-type auger, the powder being stored in an on-board tank that can be refilled intermittently. The on-board tank can be inerted by nitrogen or other inert gas supplied from its own on-board tank or through a conduit from an existing fuel tank interting system, such as an oxygen-nitrogen separation membrane or pressure swing adsorption system. The inert gas can be pure or a mixture having oxygen levels below the fuel flammability limit at the operating system temperature. The inert gas can have a relatively high pressure and function as a carry-over gas for dispersing the nanoparticles into the fuel stream. On-board conduit 56 incorporates the mixing concepts from FIGS. 2-4 to control nanoparticle catalyst dispersion within fuel in on-board mixing system 46. On-board conduit 56 is located between fuel tank 50 and distribution system 54. On-board conduit 56 includes nanoparticle bed 58 (FIG. 5A) and/or three-dimensional matrix 60 (FIG. 5B). On-board conduit 56 also includes access door 62, on-board conduit mixer 64, downstream sensor 66, on-board conduit controller 68, and upstream sensor 70.

Access door 62 is located in on-board conduit 56 to allow for nanoparticle bed 58 or three-dimensional matrix 60 to be replenished or replaced. Nanoparticle bed 58 can be any number of structures configured to gradually release nanoparticle catalyst or catalysts into untreated fuel. Nanoparticle bed 58 can be made from a variety of materials and have any variety of nanoparticle catalyst or catalysts bound to its surface. For example, nanoparticle bed 58 can be a cartridge, package, or any other assembly removable and replaceable through access door 62. Alternatively, nanoparticle bed 58 can be a fixed assembly refillable through access door 62. In other embodiments, a fluid rich in nanoparticles can be run across nanoparticle bed 58, the nanoparticles being captured by a powder bed segment of the system and released slowly into untreated fuel during engine operation. In other embodiments, nanoparticle bed 58 can include a semi-permeable membrane that controls dispersion of nanoparticles into untreated fuel. In other embodiments, nanoparticle bed 58 can include fin structures on its inner walls to partially trap nanoparticles to control release.

Three-dimensional matrix 60 can be made from a variety of materials and have any variety of nanoparticle catalyst or catalysts bound to its surface. For example, three-dimensional matrix 60 can be machined from a variety of metals or polymers, or produced by additive manufacturing. In one embodiment of this disclosure, three-dimensional matrix 60 is a matrix including a rectangular, repeating ligament structure. The structure of three-dimensional matrix 60 provides greater surface area for holding the nanoparticle catalyst. In this manner, a uniform volume of catalyst can be gradually released as fuel runs through three-dimensional matrix 60. In other embodiments, three-dimensional matrix 60 can be any three-dimensional structure providing increased surface area for gradual nanoparticle release, including but not limited to a mesh structure or screen. In other embodiments, three-dimensional matrix 60 can vary in density throughout the structure. For example, the thickness, size, and/or spacing of the ligaments or other repeating units can be varied. Three-dimensional matrix 60 can be placed within on-board conduit 56 such that all untreated fuel will pick up the nanoparticle catalyst from the surface of three-dimensional matrix 60.

The nanoparticle catalyst can be partially trapped against the flow direction within on-board conduit 56 for gradual catalyst release. In one embodiment of this disclosure, the nanoparticle catalyst can be coated onto three-dimensional matrix 60 using binders in slurry form. The binders can then be removed by a thermal process that leaves a layer of the nanoparticle catalyst bound to the surface of three-dimensional matrix 60. If a thicker nanoparticle coating is desired, this process can be repeated multiple times. In other embodiments, a slurry of nanoparticle catalyst can be sprayed onto the surface of three-dimensional matrix 60, which can then be thermally treated.

On-board conduit mixer 64 is located downstream from nanoparticle bed 58 or three-dimensional matrix 60 and mixes the fuel after the fuel has picked up nanoparticles from the surface of nanoparticle bed 58 or three-dimensional matrix 60. Downstream sensor 66 is located between on-board conduit mixer 64 and distribution system 54. In one embodiment of this disclosure, downstream sensor 66 is a light-scattering sensor. In other embodiments, downstream sensor 66 can be any sensor for detecting the concentration of nanoparticles after the fuel has passed nanoparticle bed 58 or three-dimensional matrix 60 and before the fuel reaches distribution system 54. Downstream sensor 66 communicates with on-board conduit controller 68 and upstream sensor 70 to regulate the flow of the fuel through on-board conduit 56. In this manner, the concentration of nanoparticle catalyst in the fuel can be closely monitored and controlled while an aircraft is in flight.

### Discussion of Possible Embodiments

The following are non-exclusive descriptions of possible embodiments of the present disclosure.

A system for dispersing a catalyst in a fuel, according to an exemplary embodiment of this disclosure, among other possible things, includes a first reservoir containing the fuel, and a second reservoir including an agitator and containing a quantity of the catalyst suspended in the fuel. The system also includes a first conduit extending from the first reservoir, a second conduit extending from the second reservoir, and a mixing nozzle connected to the first conduit and the second conduit. The mixing nozzle includes a first meter positioned within the first conduit, a second meter positioned within the second conduit, a valve positioned upstream from the second meter within the second conduit, a junction in flow communication with the first conduit and the second conduit, a mixer downstream from the junction, a sensor positioned between the mixer and an outlet; and a controller connected to the valve and the first and second flow regulators, the controller receiving feedback from the sensor.

The system of the preceding paragraph can optionally include, additionally and/or alternatively, any one or more of the following features, configurations and/or additional components:
A further embodiment of the foregoing system, wherein the fuel comprises fuel for an aircraft.

A further embodiment of any of the foregoing systems, wherein the catalyst comprises a nanoparticle between about 50 and about 1,000 nm in size.

A further embodiment of any of the foregoing systems, wherein the catalyst comprises a transition metal compound.

A further embodiment of any of the foregoing systems, wherein the mixing nozzle comprises a handle and a lever for manually releasing fluid from the mixing nozzle.

A further embodiment of any of the foregoing systems, wherein the mixer is a swirl mixer.

A further embodiment of any of the foregoing systems, wherein the sensor is a light-scattering sensor.

A method for dispersing a catalyst in a fuel, according to an exemplary embodiment of this disclosure, among other possible things, includes storing the fuel in a first reservoir, suspending the catalyst in the fuel in a second reservoir, and delivering a first flow from the first reservoir and a second flow from the second reservoir to a mixing nozzle. The method also includes mixing the first flow and the second flow within the mixing nozzle, sensing a quantity of the catalyst in the mixing nozzle after the first flow and the second flow have been mixed, and regulating the first flow and the second flow within the mixing nozzle based on the quantity of catalyst sensed.

The method of the preceding paragraph can optionally include, additionally and/or alternatively, any one or more of the following features, configurations and/or additional components:
A further embodiment of the foregoing method, wherein suspending the catalyst in the fuel comprises agitating the liquid.

A further embodiment of any of the foregoing methods, wherein sensing the quantity of the catalyst comprises detecting light scatter after the first flow and the second flow have been mixed.

A further embodiment of any of the foregoing methods, wherein regulating the first flow and the second flow comprises monitoring the first flow with a first meter positioned in the first conduit and monitoring the second flow with a second meter positioned in the second conduit.

An on-board system for dispersing a catalyst according to an exemplary embodiment of this disclosure, among other possible things, includes a reservoir containing an untreated fuel and a conduit extending from the reservoir to an outlet. The system also includes a flow regulator positioned within the conduit; a catalyst device positioned within the conduit downstream from the flow regulator, wherein the catalyst device is replaceable; a mixer positioned within the conduit downstream from the catalyst device; a sensor positioned within the conduit downstream from the mixer and upstream from the outlet; and a controller connected to the flow regulator, the controller receiving feedback from the sensor.

The system of the preceding paragraph can optionally include, additionally and/or alternatively, any one or more of the following features, configurations and/or additional components:
A further embodiment of the foregoing system, wherein the untreated fuel comprises fuel for an aircraft.

A further embodiment of any of the foregoing systems, wherein the on-board catalyst device comprises a nanoparticle bed.

A further embodiment of any of the foregoing systems, wherein the nanoparticle bed is replaceable or refillable via an access door in the conduit.

A further embodiment of any of the foregoing systems, wherein the on-board catalyst device comprises a nanoparticle catalyst on a surface of a three-dimensional matrix.

A further embodiment of any of the foregoing systems, wherein the three-dimensional matrix is additively manufactured.

A further embodiment of any of the foregoing systems, wherein the three-dimensional matrix is replaceable.

While the disclosure has been described with reference to an exemplary embodiment(s), it will be understood by those skilled in the art that various changes may be made without departing from the scope of the disclosure. In addition, many modifications may be made to adapt a particular situation or material to the teachings of the invention without departing from the essential scope thereof. Therefore, it is intended that the disclosure not be limited to the particular embodiment(s) disclosed, but that the disclosure will include all embodiments falling within the scope of the appended claims.

## Claims

1. A system for dispersing a catalyst in a fuel, the system comprising:
a first reservoir (12) containing the fuel;
a second reservoir (24) including an agitator (26) and containing a quantity of the catalyst suspended in the fuel;
a first conduit (14) extending from the first reservoir;
a second conduit (28) extending from the second reservoir; and
a mixing nozzle (16) connected to the first conduit and the second conduit, the mixing nozzle (16) comprising:
a first meter (34) positioned within the first conduit;
a second meter (32) positioned within the second conduit;
a valve (30) positioned upstream from the second meter within the second conduit;
a junction (36) in flow communication with the first conduit and the second conduit;
a mixer (38) downstream from the junction;
a sensor (40) positioned between the mixer and an outlet; and
a controller (42) connected to the valve and the first and second meters,
the controller receiving feedback from the sensor.

2. The system of claim 1, wherein the fuel comprises fuel for an aircraft.

3. The system of claims 1 or 2, wherein the catalyst comprises a nanoparticle between about 50 and about 1,000 nm in size.

4. The system of any preceding claim, wherein the catalyst comprises a transition metal compound.

5. The system of any preceding claim, wherein the mixing nozzle (16) comprises a handle (18) and a lever (20) for manually releasing the fuel from the mixing nozzle.

6. The system of any preceding claim, wherein the mixer (38) is a swirl mixer.

7. The system of any preceding claim, wherein the sensor (40) is a light-scattering sensor.

8. A method for dispersing a catalyst in a fuel, the method comprising:
storing the fuel in a first reservoir (12);
suspending the catalyst in the fuel in a second reservoir (24);
delivering a first flow from the first reservoir and a second flow from the second reservoir to a mixing nozzle (16);
mixing the first flow and the second flow within the mixing nozzle (16);
sensing a quantity of the catalyst in the mixing nozzle (16) after the first flow and the second flow have been mixed; and
regulating the first flow and the second flow within the mixing nozzle (16) based on the quantity of catalyst sensed.

9. The method of claim 8, wherein suspending the catalyst in the fuel comprises agitating the fuel.

10. The method of claims 8 or 9, wherein sensing the quantity of the catalyst comprises detecting light scatter after the first flow and the second flow have been mixed.

11. The method of any of claims 8-10, wherein regulating the first flow and the second flow comprises monitoring the first flow with a first meter positioned in the first conduit and monitoring the second flow with a second meter positioned in the second conduit.

## Patentansprüche

1. System zum Dispergieren eines Katalysators in einem Kraftstoff, wobei das System Folgendes umfasst:
einen ersten Behälter (12), der den Kraftstoff enthält;
einen zweiten Behälter (24), der ein Rührwerk (26) beinhaltet und eine in dem Kraftstoff suspendierte Menge des Katalysators enthält;
eine erste Leitung (14), die sich von dem ersten Behälter erstreckt;
eine zweite Leitung (28), die sich von dem zweiten Behälter erstreckt; und
eine Mischdüse (16), die mit der ersten Leitung und der zweiten Leitung verbunden ist,
wobei die Mischdüse (16) Folgendes umfasst:
einen ersten Zähler (34), der innerhalb der ersten Leitung positioniert ist;
einen zweiten Zähler (32), der innerhalb der zweiten Leitung positioniert ist;
ein Ventil (30), das stromaufwärts des zweiten Zählers innerhalb der zweiten Leitung positioniert ist;
eine Verbindungsstelle (36) in Flusskommunikation mit der ersten Leitung und der zweiten Leitung;
einen Mischer (38) stromabwärts der Verbindungsstelle;
einen Sensor (40), der zwischen dem Mischer und einem Auslass positioniert ist; und
eine Steuerung (42), die mit dem Ventil und dem ersten und zweiten Zähler verbunden ist, wobei die Steuerung Rückmeldung von dem Sensor erhält.

2. System nach Anspruch 1, wobei der Kraftstoff Kraftstoff für ein Luftfahrzeug umfasst.

3. System nach Anspruch 1 oder 2, wobei der Katalysator einen Nanopartikel mit einer Größe zwischen ungefähr 50 und ungefähr 1.000 nm umfasst.

4. System nach einem vorhergehenden Anspruch, wobei der Katalysator eine Übergangsmetallverbindung umfasst.

5. System nach einem vorhergehenden Anspruch, wobei die Mischdüse (16) einen Griff (18) und einen Hebel (20) zur manuellen Freisetzung des Kraftstoffs aus der Mischdüse umfasst.

6. System nach einem vorhergehenden Anspruch, wobei der Mischer (38) ein Wirbelmischer ist.

7. System nach einem vorhergehenden Anspruch, wobei der Sensor (40) ein lichtstreuender Sensor ist.

8. Verfahren zum Dispergieren eines Katalysators in einem Kraftstoff, wobei das Verfahren Folgendes umfasst:
Speichern des Kraftstoffs in einem ersten Behälter (12);
Suspendieren des Katalysators in dem Kraftstoff in einem zweiten Behälter (24);
Abgeben eines ersten Flusses aus dem ersten Behälter und eines zweiten Flusses aus dem zweiten Behälter an eine Mischdüse (16);
Mischen des ersten Flusses und des zweiten Flusses innerhalb der Mischdüse (16);
Erfassen einer Menge des Katalysators in der Mischdüse (16) nach dem Mischen des ersten Flusses und des zweiten Flusses; und
Regulieren des ersten Flusses und des zweiten Flusses innerhalb der Mischdüse (16) auf Grundlage der erfassten Menge des Katalysators.

9. Verfahren nach Anspruch 8, wobei das Suspendieren des Katalysators in dem Kraftstoff das Agitieren des Kraftstoffs umfasst.

10. Verfahren nach Anspruch 8 oder 9, wobei das Erfassen der Menge des Katalysators das Erfassen von Lichtstreuung nach dem Mischen des ersten Flusses und des zweiten Flusses umfasst.

11. Verfahren nach einem der Ansprüche 8-10, wobei das Regulieren des ersten Flusses und des zweiten Flusses das Überwachen des ersten Flusses mit einem ersten Zähler, der in der ersten Leitung positioniert ist, und das Überwachen des zweiten Flusses mit einem zweiten Zähler, der in der zweiten Leitung positioniert ist, umfasst.

## Revendications

1. Système de dispersion d'un catalyseur dans un carburant, le système comprenant :
un premier réservoir (12) contenant le carburant ;
un second réservoir (24) comprenant un agitateur (26) et contenant une quantité du catalyseur en suspension dans le carburant ;
un premier conduit (14) s'étendant à partir du premier réservoir ;
un second conduit (28) s'étendant à partir du second réservoir ; et
une buse de mélange (16) reliée au premier conduit et au second conduit, la buse de mélange (16) comprenant :
un premier compteur (34) positionné à l'intérieur du premier conduit ;
un second compteur (32) positionné à l'intérieur du second conduit ;
une soupape (30) positionnée en amont du second compteur à l'intérieur du second conduit ;
une jonction (36) en communication fluidique avec le premier conduit et le second conduit ;
un mélangeur (38) en aval de la jonction ;
un capteur (40) positionné entre le mélangeur et une sortie ; et
un dispositif de commande (42) relié à la soupape et aux premier et second compteurs ;
le dispositif de commande recevant une rétroaction en provenance du capteur.

2. Système selon la revendication 1, dans lequel le carburant comprend du carburant pour un avion.

3. Système selon les revendications 1 ou 2, dans lequel le catalyseur comprend une nanoparticule entre environ 50 et environ 1 000 nm en taille.

4. Système selon une quelconque revendication précédente, dans lequel le catalyseur comprend un composé de métal de transition.

5. Système selon une quelconque revendication précédente, dans lequel la buse de mélange (16) comprend une poignée (18) et un levier (20) pour libérer manuellement le carburant de la buse de mélange.

6. Système selon une quelconque revendication précédente, dans lequel le mélangeur (38) est un mélangeur à tourbillon.

7. Système selon une quelconque revendication précédente, dans lequel le capteur (40) est un capteur de diffusion de lumière.

8. Procédé de dispersion d'un catalyseur dans un carburant, le procédé comprenant :
le stockage du carburant dans un premier réservoir (12) ;
la suspension du catalyseur dans le carburant dans un second réservoir (24) ;
l'administration d'un premier écoulement à partir du premier réservoir et d'un second écoulement à partir du second réservoir à une buse de mélange (16) ;
le mélange du premier écoulement et du second écoulement à l'intérieur de la buse de mélange (16) ;
la détection d'une quantité du catalyseur dans la buse de mélange (16) une fois que le premier écoulement et le second écoulement ont été mélangés ; et
la régulation du premier écoulement et du second écoulement à l'intérieur de la buse de mélange (16) sur la base de la quantité de catalyseur détectée.

9. Procédé selon la revendication 8, dans lequel la suspension du catalyseur dans le carburant comprend l'agitation du carburant.

10. Procédé selon les revendications 8 ou 9, dans lequel la détection de la quantité du catalyseur comprend la détection de la diffusion de lumière une fois que le premier écoulement et le second écoulement ont été mélangés.

11. Procédé selon l'une quelconque des revendications 8 à 10, dans lequel la régulation du premier écoulement et du second écoulement comprend la surveillance du premier écoulement avec un premier compteur positionné dans le premier conduit et la surveillance du second écoulement avec un second compteur positionné dans le second conduit.
